# EUROPEAN PATENT APPLICATION

(11) **EP 2 750 243 A1**
(43) Date of publication of application: **02.07.2014**
(21) Application number: 12828992.3
(22) Date of filing: 07.08.2012
(51) Int. Cl.: H01M 14/00, H01L 31/04

(54) **PIGMENT SENSITIZED SOLAR BATTERY AND METHOD FOR MANUFACTURING SAME**

(30) Priority: 26.08.2011 JP 2011184233; 23.03.2012 JP 2012067195
(71) Applicant: Nippon Steel & Sumikin Chemical Co., Ltd., Chiyoda-ku Tokyo 101-0021 (JP); National University Corporation Kyushu Institute Of Technology, Tobata-ku Kitakyushu-shi Fukuoka 804-8550 (JP)
(72) Inventor: HAYASE, Shuzi, Kitakyushu-shi Fukuoka 804-8550 (JP); FUJINO, Ken-ichi, Kitakyusyu-shi Fukuoka 804-8503 (JP); YAMAGUCHI, Yoshihiro, Kitakyusyu-shi Fukuoka 804-8503 (JP)
(74) Representative: Giles, Ashley Simon
(86) International application number: PCT/JP2012/004999
(87) International publication number: WO 2013/031098

(57) **Abstract**

To provide a dye-sensitized solar cell with suppressed photoelectric conversion efficiency deterioration due to a gap to be possibly be generated between a transparent member on which a light is incident and the dye-sensitized solar cell components.

A dye-sensitized solar cell 10 is provided with a dye-sensitized solar cell components unit 14 arranged within a cylindrical transparent member 12, the unit having an electrolyte layer, current collecting electrode 18, and porous semiconductor layer 20 carrying dye cylindrically laminated in this order centering around a cathode electrode layer 16. The cathode electrode layer 16 is a spring body, and the dye-sensitized solar cell components unit 14 is pressed to the transparent member 12 with an elastic restoring force of the spring.

## Description

### Technical Field

The present invention relates to a dye-sensitized solar cell and a method for manufacturing the same.

### Background Art

A dye-sensitized solar cell is called a wet solar cell, Graetzel cell, or the like, and is characterized by having an electrochemical cell structure using an electrolyte solution without using a silicon semiconductor. For example, the dye-sensitized solar cell has a simple structure in which an iodine solution or the like as an electrolyte is disposed between a porous semiconductor layer and a counter electrode (cathode electrode), the porous semiconductor layer being a titania layer or the like formed by baking titanium dioxide powder or the like on an anode electrode composed of a transparent conductive glass plate and making a dye adsorbed on the baked powder, and the counter electrode being composed of a conductive glass plate (conductive substrate).

The dye-sensitized solar cell is inexpensive in terms of its materials in comparison with a silicon solar cell and does not require extensive facilities for its fabrication, and thereby attracts attention as a low-cost solar cell.

The dye-sensitized solar cell generally has a flat plate structure. For example, dye-sensitized solar cell components such as a transparent electrode, a semiconductor electrode carrying dye absorbed thereon and a counter electrode are laminated and the periphery thereof is sealed by way of an adhesive or the like to inject an electrolyte solution. However, electrolyte solution leakage and air or moisture ingress from an enclosing part occur under long-term outdoor exposure or high-temperature and high-humidity environment, which has possibly led to deterioration of the cell. In addition, the larger the cell in size, the larger an area of the enclosing part, which disadvantageously has further possibly led to the deterioration of the cell.

In consideration of the above defects in the colored paper-sensitized solar cell in related art, a cylindrical dye-sensitized solar cell having a cylindrical structure has been proposed in which an anode electrode layer, dye-sensitized porous semiconductor layer, electrolyte layer, and cathode electrode are sequentially provided on an inner surface of a transparent glass tube (Patent Literature 1).

Moreover, a photoelectric conversion element has been proposed in which a first electrode wound in a coiled form around an outer side of a tubular second electrode is arranged in a tubular transparent member (Patent Literature 2).

The dye-sensitized solar cell having such a cylindrical structure can be said to be high in durability because of being small in the number of enclosed portions even in a case of the large-sized cell as compared with the dye-sensitized solar cell of the flat plate structure.

However, since these cylindrical dye-sensitized solar cells house the dye-sensitized solar cell component within the tubularly-formed transparent member, a gap is possibly generated between the transparent member and the dye-sensitized solar cell component. If the gap is generated, the electrolyte leaks and enters into the gap and an incident light passed through the transparent member is absorbed by the electrolyte accumulated in the gap before reaching the electrode, possibly leading to that sufficient photoelectric conversion is not conducted.

### Citation List

### Patent Literature

Patent Literature 1: Japanese Patent Laid-Open No. 2003-77550
Patent Literature 2: Japanese Patent Laid-Open No. 2010-40391

### Summary of Invention

### Technical Problem

The problem to be solved is that in the cylindrical dye-sensitized solar cell in related art, a gap occurs between the transparent member and the dye-sensitized solar cell component or between the dye-sensitized solar cell components to possibly cause a photoelectric conversion efficiency to be decreased.

### Solution to Problem

A dye-sensitized solar cell according to the present invention includes,
a dye-sensitized solar cell components unit having a cathode electrode layer, an electrolyte layer, a current collecting electrode, and a porous semiconductor layer carrying dye which are provided within a cylindrical or circular truncated conical transparent member,
wherein the components of the dye-sensitized solar cell components unit are laminated and arranged in the above order centering around the cathode electrode layer toward the transparent member, and
the cathode electrode layer is a spring body and presses the dye-sensitized solar cell components unit to the transparent member with an elastic restoring force.

The dye-sensitized solar cell according to the present invention is characterized in that the spring body is preferably a flat spiral spring.

The dye-sensitized solar cell according to the present invention is characterized in that the spring body preferably is formed by performing bending work on a metal plate and is an expandable and contractable cylinder in which a part of a bended surface thereof along an axis is cut out in an axis direction.

At this time, an auxiliary spring is preferably hung across the cut out portion of the cylinder.

A method for manufacturing a dye-sensitized solar cell according to the present invention includes,
a step of laminating and arranging a porous semiconductor layer carrying dye at an outer periphery of a current collecting electrode, and inserting the layer into within a cylindrical or circular truncated conical transparent member, and
a step of fixing one side of a cathode electrode layer material in a foil form to a support rod and winding the cathode electrode material around the support rod in a spiral manner to obtain the spring body-formed cathode electrode layer in a contracted state and inserting the support rod wound by the cathode electrode layer into a space inside the current collecting electrode which is inserted into within the transparent member.

The dye-sensitized solar cell according to the present invention includes an insulating core, a cathode electrode layer, an electrolyte layer, a current collecting electrode, and a porous semiconductor layer carrying dye within a tubular or pyramidal transparent member which are laminated and arranged in this order centering around the core toward the transparent member,
wherein the core is formed by rolling and inserting inside the cathode electrode layer a sheet material having flexibility and restoring force, and the cathode electrode layer, the electrolyte layer, the current collecting electrode and the porous semiconductor layer carrying dye are pressed to the transparent member with the restoring force of the core.

The dye-sensitized solar cell according to the present invention is the dye-sensitized solar cell according to claim 1 characterized in that the core is preferably hollow tubular or hollow pyramidal, one end part of the current collecting electrode provided to be protruded from a laminated portion is folded to the inside of the core, and one end part of a first extraction electrode is inserted inside the core so as to be electrically connected with the one end part of the current collecting electrode, and
a second extraction electrode is attached so as to be electrically connected with the one end part of the cathode electrode layer provided to be protruded from the laminated portion.

The dye-sensitized solar cell according to the present invention is the dye-sensitized solar cell according to claim 1 characterized in that the transparent member is a one side-opening member, the core is preferably hollow tubular or hollow pyramidal, an electric conductor layer is provided inside the core, one end part of the current collecting electrode provided to be protruded from the laminated portion is folded to the inside of one end part of the electric conductor layer to be electrically connected with the electric conductor layer, and one end part of a first extraction electrode is inserted so as to be electrically connected with the other end part of the electric conductor layer, and
a second extraction electrode is attached so as to be electrically connected with the one end part of the cathode electrode layer provided to be protruded from the laminated portion.

### Advantageous Effects of Invention

In a dye-sensitized solar cell according to the present invention, since a cathode electrode layer is a spring body and presses the dye-sensitized solar cell components unit to a transparent member with an elastic restoring force, or the cathode electrode layer, electrolyte layer, current collecting electrode, and porous semiconductor layer carrying dye are pressed to the transparent member with a restoring force of a core, no gaps are generated between the transparent member and the cathode electrode layer, electrolyte layer, current collecting electrode and porous semiconductor layer carrying dye. For this reason, the dye-sensitized solar cell can be obtained with the photoelectric conversion efficiency deterioration being suppressed which may occur due to the gap generation.

According to a method for manufacturing a dye-sensitized solar cell of the present invention, a dye-sensitized solar cell having the above advantageous effects can be preferably obtained.

### Brief Description of Drawings

[Figure 1] Figure 1 is a cross-sectional view of a cylindrical dye-sensitized solar cell viewed from a radial direction according to a first example of a present embodiment.
[Figure 2] Figure 2 is a cross-sectional view of the cylindrical dye-sensitized solar cell viewed from a longitudinal direction taken along a line off a cutout portion of a cathode electrode according to the first example of the present embodiment.
[Figure 3] Figure 3 is a diagram for explaining an example in which an auxiliary spring is hung across a cut out portion of a cathode electrode layer of the cylindrical dye-sensitized solar cell according to the first example of the present embodiment.
[Figure 4] Figure 4 is a schematic cross-sectional view illustrating a cylindrical dye-sensitized solar cell taken along the radial direction according to a second example of the present embodiment.
[Figure 5] Figure 5 is a schematic cross-sectional view illustrating the cylindrical dye-sensitized solar cell taken along a side surface direction according to the second example of the present embodiment.
[Figure 6] Figure 6 is a schematic cross-sectional view illustrating a cylindrical dye-sensitized solar cell taken along a side surface direction according to a fourth example of the present embodiment.
[Figure 7] Figure 7 is a schematic cross-sectional view illustrating the cylindrical dye-sensitized solar cell taken along the side surface direction according to the fourth example of the present embodiment.
[Figure 8] Figure 8 is a schematic cross-sectional view illustrating a cylindrical dye-sensitized solar cell taken along a side surface direction according to a fifth example of the present embodiment.
[Figure 9] Figure 9 is a schematic cross-sectional view illustrating a cylindrical dye-sensitized solar cell taken along a side surface direction according to a sixth example of the present embodiment.
[Figure 10] Figure 10 is a schematic cross-sectional view of the dye-sensitized solar cell for explaining Example 5.

### Description of Embodiments

Embodiments of the present invention are described below.

A dye-sensitized solar cell according to the present embodiment includes a cathode electrode layer, electrolyte layer, current collecting electrode and porous semiconductor layer carrying dye in this order from the center within a transparent member.

In the dye-sensitized solar cell according to the present embodiment, the cathode electrode layer is a spring body, or an insulating core provided inside the cathode electrode layer is formed by rolling a sheet material having flexibility and restoring force such that the cathode electrode layer presses the electrolyte layer, current collecting electrode, and porous semiconductor layer carrying dye to the transparent member with an elastic restoring force of the cathode electrode layer or the restoring force of the core.

The dye-sensitized solar cell according to the present embodiment has no gaps generated between the transparent member and the cathode electrode layer, electrolyte layer, current collecting electrode and porous semiconductor layer carrying dye. For this reason, the dye-sensitized solar cell can be obtained with the photoelectric conversion efficiency deterioration being suppressed which may occur due to the gap generation.

Hereinafter, a description will be given of a dye-sensitized solar cell according to the present embodiment with specific examples cited.

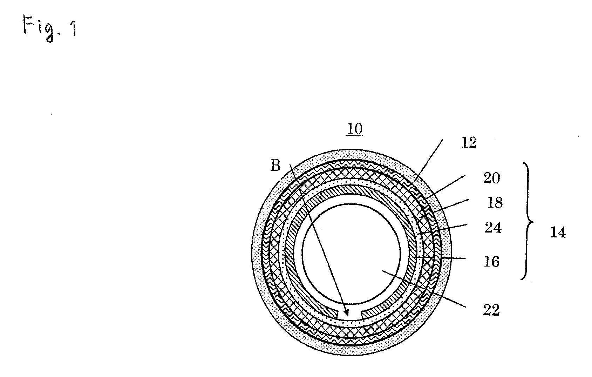

First, a description will be given of a dye-sensitized solar cell according to a first example of the present embodiment with reference to Figure 1 to Figure 3.

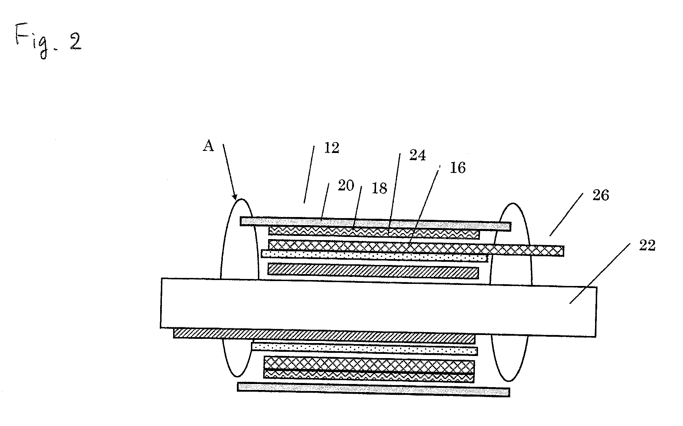

A dye-sensitized solar cell 10 shown in Figure 1 and Figure 2 according to the first example of the present embodiment has a dye-sensitized solar cell components unit 14 arranged within a cylindrical transparent member 12. Note that the transparent member 12 may be a circular truncated conical member. A light is incident on a side surface in a longitudinal direction of the transparent member 12.

The dye-sensitized solar cell components unit 14 includes a cathode electrode layer 16, electrolyte layer (not shown in the figure), current collecting electrode 18, and porous semiconductor layer 20 carrying dye. The dye-sensitized solar cell components unit 14 has the electrolyte layer, current collecting electrode 18, and porous semiconductor layer 20 carrying dye which are cylindrically laminated and arranged in this order centering around the cathode electrode layer 16. Note that reference numeral 22 designates a core rod, and reference numeral 24 designates a porous isolation layer, respectively. Note that the core rod 22 and isolation layer 24 may be eliminated. Moreover, reference numeral 26 represents an extraction electrode.

Accurately, the electrolyte layer is formed by injecting an electrolyte solution into a space defined between the cathode electrode layer 16 and the current collecting electrode 18 after forming the dye-sensitized solar cell components unit 14. The electrolyte solution is impregnated in the porous semiconductor layer 20 carrying dye via the current collecting electrode 18 formed to be porous.

The cathode electrode layer 16 is a spring body and presses the dye-sensitized solar cell components unit 14 to the transparent member 12 with an elastic restoring force of the spring.

The dye-sensitized solar cell 10, which is a so-called fiber type or tube type, can considerably decrease variation of a power generation amount with respect to an incident angle of light as compared with a dye-sensitized solar cell of a flat plate type in related art, in other words, a flat panel type, and is high in durability because of being small in the number of enclosed portions.

Materials for the transparent member 12 are not specifically limited so long as they are light transmissive materials. For example, an alkali-free glass substrate, another glass substrate, and resin substrate may be used, and any material may be used so long as it is those typically used as the transparent member for the photoelectric conversion element, specifically, glass, PET, polycarbonate, polyether sulfone, PEN, fluorine resin and the like. The transparent member is adequately selected from among them with taking into account the durability against the electrolyte solution and the like.

The transparent member 12 is set to have a thickness so as to have a strength enough not to be irregularly deformed nor broken due to the elastic restoring force of the spring. The thickness is adequately set depending on a magnitude of the elastic restoring force given to the spring body, a size of the dye-sensitized solar cell 10, a kind of material for the transparent member 12 and the like.

Materials for the cathode electrode layer 16 include those obtained by laminating platinum on a titanium foil by sputtering or the like and those obtained by laminating platinum using a conducting metal in place of titanium. A thickness of the electrode layer is preferably 20 µm to 100 µm, and more preferably 20 to 50 µm in terms of easy workability with respect to the spring body. In place of platinum, carbon materials such as graphite, carbon black and the like, and one kind or two or more kinds of metal materials selected from a group consisting of Ti, W, Ni, Pt, Ta, Nb, Zr and Au may be used.

The cathode electrode layer 16 is not specifically limited so long as the dye-sensitized solar cell components unit 14 can be directed to an outer periphery direction with the elastic restoring force of the spring body and preferably can be uniformly pressed. For example, as the simplest structure, those obtained by curving a metal plate into a cylindrical form as shown in Figure 1, that is, those obtained by bending work can be cited. At this time, if the expandable and contractable cathode electrode layer 16, which is formed into a shape having a part of a bended surface thereof along an axis of the cylinder is cut out in an axis direction (cutout portion is shown in Figure 1 by an arrow B), is applied with a force, a width of the cutout portion decreases, in other words, the spring body contracts, while if the force applied to the cathode electrode layer 16 is released, the width of the cutout portion increases, in other words, the spring body expands.

The elastic restoring force given to the cathode electrode layer (spring body) 16 is set by adequately selecting and adjusting a quality of material, thickness, contraction degree and the like for the cathode electrode layer 16 depending on shapes of the transparent member 12 and dye-sensitized solar cell components unit 14.

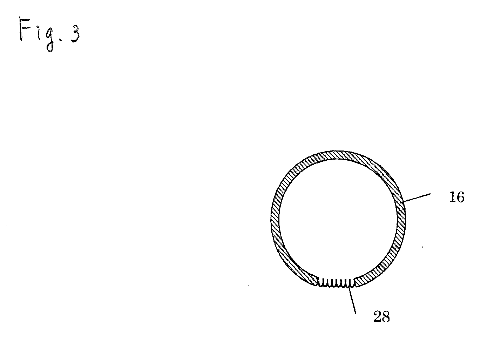

At this time, an auxiliary spring 28 may be hung across the cut out portion of the cylindrical cathode electrode layer 16 as shown in Figure 3. This makes it possible to adjust and increase the elastic restoring force of the cathode electrode layer (spring body) 16 to a desired magnitude.

For the auxiliary spring 28, a proper spring may be used such as a coil spring, volute spring and the like. The auxiliary spring 28 may be provided by one at the center of the cathode electrode layer 16 in the longitudinal direction, or may be provided by two or more depending on the size of the cathode electrode layer 16 or the desired magnitude of the elastic restoring force.

For the cathode electrode layer 16, a flat spiral spring may be used in which a metal plate is wound in a spiral manner.

In a case where the cathode electrode layer 16 is the flat spiral spring, a spring shape is adequately set depending on the shapes of the transparent member 12 and dye-sensitized solar cell components unit 14. For example, the larger an inner diameter of the transparent member 12, the larger a pressing force required for the flat spiral spring. In such a case, the number of turns in the flat spiral spring may be increased or the thickness of the conducting metal formed into the flat spiral spring may be increased. On the other hand, in a case where the number of turns above is too increased or the thickness of the conducting metal above is too increased, the cathode electrode layer 16 may be possibly difficult to be arranged in the transparent member 12.

The elastic restoring force of the cathode electrode layer 16 causes the dye-sensitized solar cell components unit 14 to be pressed to the transparent member 12 to make the porous semiconductor layer 20 carrying dye and the transparent member 12 closely contact with each other.

If the core rod 22 is used, the core rod 22 may be either an insulator or electric conductor. The core rod 22 fills a space in the cathode electrode layer 16, which eliminates infiltration of the electrolyte solution into the space in the cathode electrode layer 16. Note that if the core rod 22 is the electric conductor, the core rod 22 also functions as a part of the cathode electrode layer 16.

Materials for the insulator are not specifically limited so long as they are not corroded or eluted by the electrolyte, and for example, include glass, inorganic material such as alumina, resin such as heat-resistant porous plastic and preferably are fluorine resin having flexibility such as Teflon (Teflon is a registered trademark) or the like. Materials for the electric conductor are not specifically limited so long as they have a good conductive property and are not eluted by the electrolyte, and for example, metal may be used such as Ti, Sn, Zr, Zn, In, W, Fe, Ni, Ag or the like and the same material as the cathode electrode layer is preferably used.

If the core rod 22 is not used, the inside of the cathode electrode layer 16 is preferably sealed with an adequate seal material.

For materials for the porous semiconductor layer 20, for example, oxide of metal such as Ti, Sn, Zr, Zn, In, W, Fe, Ni, Ag or the like may be used, and oxides of Ti or Sn of these are more preferable.

The porous semiconductor layer 20 is made of a semiconducting material baked at a temperature of 300°C or higher and, more preferably, at a temperature of 450°C or higher. On the other hand, an upper limit of baking temperature is not specified in particular, but is sufficiently lower than the melting point of the material of the porous semiconductor layer and, more preferably, 550°C or lower.

A thickness of the porous semiconductor layer 20 is not specifically specified, but preferably 3 to 20 µm.

A dye carried by the porous semiconductor layer 20 is one having at least any adsorption at wavelengths of 400 nm to 1,000 nm, and includes, for example, metal complexes such as ruthenium dyes and phthalocyanine dyes, and organic dyes such as cyanine dyes. An dye adsorption method is not specifically limited, but can be carried out by, for example, a so-called impregnation method in which the burned porous semiconductor is dipped in a dye solution to cause the dye to be chemically adsorbed to the surface thereof.

For the current collecting electrode 18, porous metal is used such as a wire mesh, expanded metal, pored metal foil, metal sintered body, and pored plate having an effective conducting metal layer provided thereon, for example.

Materials for the current collecting electrode 18 are not specifically limited so long as they have a good conductive property and are not corroded or eluted by the electrolyte, and one kind or two or more kinds of metal materials selected from a group consisting of Ti, W, Ni, Pt, Ta, Nb, Zr, Fe, Cu, Cr and Au, or compound of these materials may be preferably used, for example. If metal material such as stainless steel to be possibly corroded by the electrolyte is used, metal material having good corrosion resistance may be deposited on a surface of the metal material by sputtering, plating, evaporation and the like.

A thickness of the current collecting electrode 2 is not specifically limited, but is preferably 5 to 40 µm.

In the case of providing the isolation layer 24, materials for the isolation layer 24 are not limited so long as they have a good insulation property and are porous materials not corroded or eluted by the electrolyte, and for example, include a glass fiber molding, inorganic porous body such as a porous alumina plate, and organic porous body such as heat-resistant porous plastic and are preferably a glass fiber molding such as glass paper or an organic porous body such as Teflon.

A thickness of the isolation layer 24 is not specifically limited, but is preferably 10 to 40 µm.

Materials for the electrolyte layer are not specifically limited, and for example, are those containing iodine, lithium ion, ionic liquid, t-butylpyridine and the like, and in a case of iodine, a redox couple consisting of a combination of iodide ions and iodine can be used. As the redox couple, metal complex such as cobalt may be used. Moreover, a solvent capable of dissolving the redox couple is included, and such a solvent includes acetonitrile, γ-butyrolactone, propionitrile, ethylene carbonate, ionic liquid and the like, for example.

In the dye-sensitized solar cell 10 constructed as above according to the first example of the present embodiment, the porous semiconductor layer 20 carrying dye and the transparent member 12 are made closely contact with each other, preventing decrease of the photoelectric conversion efficiency which possibly occurs owing to generation of a gap between the porous semiconductor layer 20 carrying dye and the transparent member 12. In addition, close contacts are achieved without gaps between the members constituting the dye-sensitized solar cell components unit 14, that is, between the cathode electrode 16 and the isolation layer 24, and between the isolation layer 24 and the current collecting electrode 18, shortening a diffusion length of the electrolyte solution to improve the photoelectric conversion efficiency.

Next, a description is given of a method for manufacturing a dye-sensitized solar cell according to the present embodiment.

The method for manufacturing the dye-sensitized solar cell according to the present embodiment includes
a step (step A) of laminating and arranging a porous semiconductor layer carrying dye at an outer periphery of a current collecting electrode, and inserting the layer into within a cylindrical or circular truncated conical transparent member, and
a step (step B) of fixing one side of a cathode electrode layer material in a foil form to a support rod and winding the cathode electrode material around the support rod in a spiral manner to obtain the spring body-formed cathode electrode layer in a contracted state and inserting the support rod wound by the cathode electrode layer into a space inside the current collecting electrode which is inserted into within the transparent member.

First, a description is given of a method of step A for inserting and arranging the current collecting electrode having the porous semiconductor layer carrying dye inside a cylindrical or circular truncated conical transparent member.

The porous semiconductor layer of the current collecting electrode having the porous semiconductor layer carrying dye, being as an outer side, is inserted into the transparent member with portions of the current collecting electrode not given the porous semiconductor layer being set as a forward end and rear end, and both ends of the current collecting electrode are protruded from both ends of the glass tube respectively by about 10 mm, for example. The protruded portions are extraction electrodes.

At this time, it is preferable that the current collecting electrode having the porous semiconductor layer carrying dye is rolled to have a size to be able to be inserted inside the transparent member with a sufficient room. If the insertion is carried out without rolling, the electrode touches the transparent member at an inlet portion of the transparent member to possibly cause the porous semiconductor layer to be peeled off from the current collecting electrode or damage the porous semiconductor layer. However, if the current collecting electrode is bended to be too small, the current collecting electrode is possibly broken or the current collecting electrode is possibly peeled off from the semiconductor layer, and therefore preferably is not bended excessively. In a case where an inner diameter of the transparent member is small, the porous semiconductor layer may be formed on the current collecting electrode which is rolled in advance.

The protruded portions of the current collecting electrode may be used as the extraction electrode without change, but the extra protrusion portions may be also thinly cut in order to improve sealing property. Further, the portions as the extraction electrode may be subjected to weld processing with a metal wire, metal foil or the like in advance in order to be electrically connected with other metal members or may be electrically connected with the metal members. For materials of the metal member, those having a good conductive property may be adequately used. However, in a case where the metal member is probably brought into contact with the electrolyte solution depending on a sealing method, those not corroded by the electrolyte are used. The metal member like this is not specifically limited, and for example, metal including Ti, Sn, Zr, Zn, In, W, Fe, Ni, Ag and the like may be used, but preferably the same material as the cathode electrode layer is used.

Next, a description is given of a method of step B for fixing one side of a cathode electrode layer material in a foil form to a support rod and winding the cathode electrode material around the support rod (core rod) in a spiral manner to obtain the spring body-formed cathode electrode layer in a contracted state and inserting the support rod wound by the cathode electrode layer into a space inside the current collecting electrode which is inserted into within the transparent member.

For the support rod, used is one thinner than the inner diameter of the transparent member and longer than a length of the transparent member or than the cathode electrode. One side of the cathode electrode layer material in a sheet form is fixed to the support rod, and the cathode electrode layer material is wound around the support rod in a spiral manner by rotating the support rod, for example to obtain the cathode electrode layer. In a case of using an insulation sheet, the insulation sheet is set at the outer side. The cathode electrode layer is fixed by tape in order to maintain a spiral state.

At this time, as a method for fixing the cathode electrode, a polyimide tape can be used. However, since the polyimide tape is possibly dissolved into electrolyte solution in the long term, instead of this the support rod may be provided with a through hole in which a part of an electrode foil (cathode electrode layer material) may be inserted or may be pressed to be fixed. In a case where the support rod is detached from the inside of the cell, the tape for fixing may be set to be easily peeled off in advance, or the support rod may be set structurally to be easily removed from the electrode foil.

If the support rod to which the cathode electrode layer material is fixed is rotated to wind the cathode electrode layer material in a spiral manner, a surface having been subjected to the platinum sputtering is necessarily set to face up.

In a case where the isolation layer cannot be inserted within the transparent member together with the current collecting electrode because the inner diameter of the transparent member is small, the insulation sheet may be put on a platinum sputtered surface of the cathode electrode to be fixed together to the support rod and wound in a spiral manner.

The support rod having the cathode electrode layer which is wound in a spiral manner and maintained as the spring body in a compressed state may be temporarily fixed by the tape or the like so as not to touch the transparent member when inserted into the transparent member. The tape or the like is preferably adhered to a location where peeling is easily carried out after the insertion. The support rod may be provided with a groove or the like for temporary fixing.

In addition, in a case where the support rod having the cathode electrode layer is inserted within the current collecting electrode in the transparent member, a forward end of the support rod may be subjected to edge removal processing so as not to damage the current collecting electrode or the porous semiconductor layer.

After the support rod having the cathode electrode layer is inserted into the transparent member, wether or not the insulation sheet is positioned between the current collecting electrode and the cathode electrode layer is confirmed, and the tape or the like maintaining the spiral state is peeled off to release the spiral state. If the support rod is to be detached, the cathode electrode layer may be set structurally in advance to be detached by inversely rotating the inserted support rod.

The electrolyte solution can be directly injected between the cathode electrode layer and the current collecting electrode or the like. By utilizing the fact that the porous semiconductor layer carrying dye and the current collecting electrode are porous, the electrolyte solution may be injected from a boundary between the ends of the dye-sensitized solar cell members unit and the transparent member by use of a syringe, and the electrolyte solution may be penetrated from the end of the transparent member by use of capillarity under a reduced pressure state. In order to easily inject the electrolyte solution, a part of the transparent member may be sealed depending on a size of the dye-sensitized solar cell member or an opening degree of the end of the transparent member.

Finally, the ends of the inserted solar cell members unit and transparent member are sealed such that the electrolyte solution previously injected is not leaked.

As a sealing structure shown in Figure 2 by an arrow A, for example, a method using a seal material such as a UV curable resin may be adopted. The UV curable resin is applied and a UV light is radiated for curing. The application and curing are preferably repeated in several batches such that the liquid is not leaked. In a case of using a thermal curing resin seal material, a thermal curing resin is applied and the curing may be carried out at a low temperature of a room temperature to about 60°C. Further, a solar cell part may be fabricated into a screw, slope, or flange such that the sealing is carried out by mechanically squeezing by way of a packing, clamp, screw cap, flange and the like.

In the method for manufacturing the dye-sensitized solar cell constructed as above according to the present embodiment, the dye-sensitized solar cell according to the first example of the present embodiment can be preferably obtained.

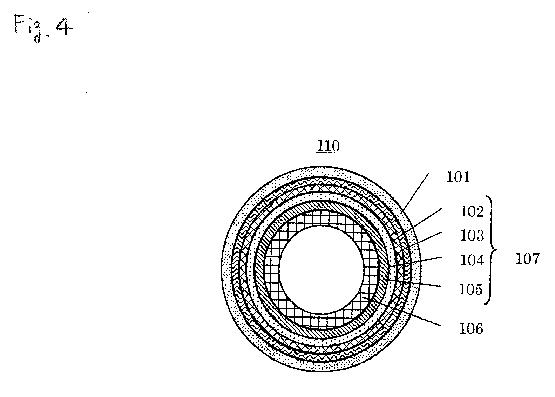

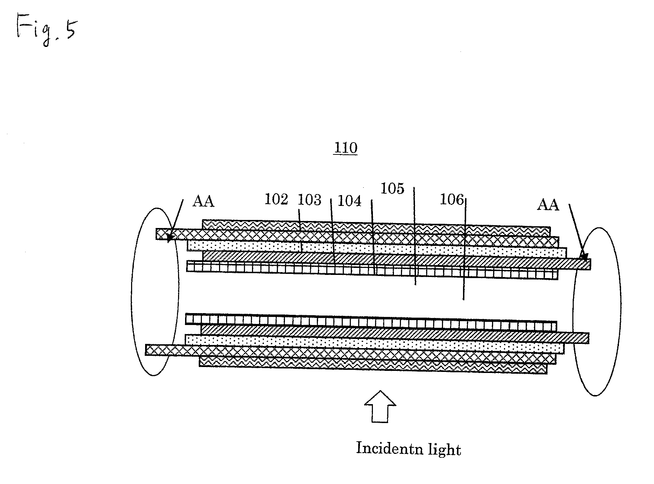

Next, a description is given of a dye-sensitized solar cell according to a second example of the present embodiment with reference to Figure 4 and Figure 5.

A dye-sensitized solar cell 110 according to the second example of the present embodiment, illustrated in a schematic cross-sectional view taken along a radial direction in Figure 4 and a schematic cross-sectional view taken along a side surface direction in Figure 5, has a dye-sensitized solar cell components unit 107 and an insulating core 106 which are arranged within a tubular transparent member 101. Here, the dye-sensitized solar cell components unit 107 is a laminate body having a cathode electrode layer 105, electrolyte layer (not shown in the figure), current collecting electrode 103 and porous semiconductor layer 102 carrying dye which are laminated and arranged in this order centering around the cathode electrode layer 105 toward the transparent member 101. The transparent member 101 has a tubular shape or a pyramidal shape. The current collecting electrode 103 functions as an anode electrode. The core 106 is formed by rolling and inserting inside the cathode electrode layer 105 a sheet material having flexibility and restoring force. The core 106 is tubular or pyramidal, and preferably hollow tubular or hollow pyramidal. The cathode electrode layer 105, electrolyte layer, current collecting electrode 103 and porous semiconductor layer 102 are pressed to the transparent member 101 with the restoring force of the rolled core 106.

Note that the tubular shape of the transparent member 101 is intended to not be limited to a cylinder, and the pyramidal shape of the transparent member 101 is intended to not be limited to the circular truncated conical shape. A reference numeral 104 designates an isolation layer arranged between the cathode electrode layer 105 and the current collecting electrode 103. The isolation layer 104 may be omitted. In Figure 5, an arrow AA designates a sealing structure. The sealing structure AA may use a seal material such as a UV curable resin and the like, for example.

Accurately, the electrolyte layer is formed by injecting the electrolyte solution into a space defined between the cathode electrode layer 105 and the current collecting electrode 103 after forming the dye-sensitized solar cell components unit 107. The electrolyte solution is impregnated in the porous semiconductor layer 102 carrying dye via the current collecting electrode 103 formed to be porous.

The dye-sensitized solar cell 110 is a so-called fiber type or tube type, and a light is incident on the entire side surface of the cell. The dye-sensitized solar cell 110 can considerably decrease variation of a power generation amount with respect to an incident angle of light as compared with a dye-sensitized solar cell of a flat plate type in related art, in other words, a flat panel type, and is high in durability because of being small in the number of enclosed portions.

Materials for the transparent member 101 are not specifically limited so long as they are light transmissive materials. For example, an alkali-free glass substrate, another glass substrate, and resin substrate may be used, and any material may be used so long as it is those typically used as the transparent member for the photoelectric conversion element, specifically, glass, PET, polycarbonate, polyether sulfone, PEN, fluorine resin and the like. The transparent member is adequately selected from among them with taking into account the durability against the electrolyte solution and the like.

The transparent member 101 is set to have a thickness so as to have a strength enough not to be irregularly deformed nor broken due to the restoring force of the core 106. The thickness is adequately set depending on a magnitude of the restoring force of the core 106, a size of the dye-sensitized solar cell 110, a kind of material for the transparent member 101 and the like. The transparent member 101 has preferably a cylindrical shape in terms of the strength.

For the insulating core 106, any material of an insulator, electric conductor coated by an insulating material or semiconductor coated by an insulating material can be applied.

For example, in a case where the core 106 is an insulator, materials therefor are not specifically limited so long as they are not corroded or eluted by the electrolyte, and for example, include resin such as heat-resistant porous plastic or the like and preferably are fluorine resin having flexibility such as Teflon (Teflon is a registered trademark).

The core 106 is formed by rolling and inserting inside the cathode electrode layer a sheet material having flexibility and restoring force, as already described. The core 106 presses the cathode electrode layer 105 to the transparent member 101 from inside toward outside with the restoring force. For example, the sheet material, which is rolled to be small into a cylindrical shape in being used as the core 106, is naturally spread to return to an original sheet form like the flat spiral spring, exerting a sufficient restoring force. Whereas, when the sheet material, which has been already rolled into cylindrical form, is used as the core 106, a plurality of sheet materials are preferably stacked to be used in order to exert a sufficient restoring force.

Although differing depending on the quality of materials of the used sheet material, the thicker the thickness of the sheet material, the larger the restoring force of the core 106 in being rolled. However, if the thickness of the sheet material is too thick, it may be possibly difficult to insert into the transparent member 1, and the dye-sensitized solar cell components unit 7 may be possibly broken owing to the excessive restoring force. Whereas if the thickness of the sheet material is thin, the restoring force is low and thus the dye-sensitized solar cell components unit 107 may be possibly to be not sufficiently pressed to the transparent member 101. A plate thickness of the core 106 is necessary to be selected corresponding to the inner diameter of the transparent member 101. For example, if the core 106 is Teflon, the sheet having a thickness of 0.3 mm to 1.0 mm is preferable with respect to the transparent member having the inner diameter of 16 mm, and the sheet material is preferably stacked threefold to tenfold when installed within the cathode electrode layer 105.

For each member of the cathode electrode layer 105, isolation layer 104, current collecting electrode 103, and porous semiconductor layer 102 carrying dye, described in detail later, which are to be rolled and inserted into the transparent member 101, used are materials having flexibility enough to be able to be pressed to adjacent other members by the restoring force of the core 106.

Materials for the cathode electrode layer 105 include those obtained by laminating platinum on a titanium foil by sputtering or the like, those obtained by laminating platinum using a conducting metal in place of titanium and those obtained by forming conductive carbon into a sheet form. For the conductive carbon, graphite, ketjen black, and carbon nanotube are preferably used, and graphite which is inexpensive and has a high conductive property is in particular preferably used. A thickness of the cathode electrode layer 105 is preferably 20 µm to 100 µm and more preferably 20 to 50 µm.

For the current collecting electrode 103, porous metal such as a wire mesh, expanded metal, pored metal foil, metal sintered body and pored plate having an effective conducting metal layer provided thereon, carbon sheet or carbon paper, and conductive sheet having carbon fibers interweaved therein can be used, for example.

Materials for the current collecting electrode 103 are not specifically limited so long as they have a good conductive property and are not corroded or eluted by the electrolyte, and one kind or two or more kinds of metal materials selected from a group consisting of Ti, W, Ni, Pt, Ta, Nb, Zr, Fe, Cu, Cr and Au, or compound of these materials may be preferably used, for example. If metal material such as stainless steel to be possibly corroded by the electrolyte is used, metal material having good corrosion resistance may be deposited on a surface of the metal material by sputtering, plating, evaporation and the like.

A thickness of the current collecting electrode 103 is not specifically limited, but is preferably 5 to 40 µm.

Materials for the porous semiconductor layer 102 are semiconductor materials and for example, oxide of metal such as Ti, Sn, Zr, Zn, In, W, Fe, Ni, Ag or the like may be used, and oxides of Ti or Sn of these are more preferable.

The porous semiconductor layer 102 is made of a semiconducting material baked at a temperature of 300°C or higher and, more preferably, at a temperature of 450°C or higher. On the other hand, an upper limit of baking temperature is not specified in particular, but is sufficiently lower than the melting point of the material of the porous semiconductor layer and, more preferably, 550°C or lower.

A thickness of the porous semiconductor layer 102 is not specifically specified, but preferably 3 to 20 µm.

A dye carried by the porous semiconductor layer 102 is one having at least any adsorption at wavelengths of 400 nm to 1,000 nm, and includes, for example, metal complexes such as ruthenium dyes and phthalocyanine dyes, and organic dyes such as cyanine dyes. A dye adsorption method is not specifically limited, but can be carried out by, for example, a so-called impregnation method in which the burned porous semiconductor is dipped in a dye solution to cause the dye to be chemically adsorbed to the surface thereof.

In the case of providing the isolation layer 104, materials for the isolation layer 104 are not limited so long as they have a good insulation property and are porous materials not corroded or eluted by the electrolyte, and for example, include a glass fiber molding, inorganic porous body such as a porous alumina plate, and organic porous body such as heat-resistant porous plastic and are preferably a glass fiber molding such as glass paper or an organic porous body such as Teflon.

A thickness of the isolation layer 104 is not specifically limited, but is preferably 10 to 40 µm.

Materials for the electrolyte layer are not specifically limited, and for example, are those containing iodine, lithium ion, ionic liquid, t-butylpyridine and the like, and in a case of iodine, a redox couple consisting of a combination of iodide ions and iodine can be used. As the redox couple, metal complex such as cobalt may be used. Moreover, a solvent capable of dissolving the redox couple is included, and the solvent includes acetonitrile, γ-butyrolactone, propionitrile, 3-methoxy propionitrile, ethylene carbonate, propylene carbonate, ionic liquid and the like, for example.

In the dye-sensitized solar cell 110 constructed as above according to the second example of the present embodiment, the porous semiconductor layer 102 carrying dye and the transparent member 101 are made uniformly and closely contact with each other, preventing decrease of the photoelectric conversion efficiency which possibly occurs owing to generation of a gap between the porous semiconductor layer 102 carrying dye and the transparent member 101. In addition, close contacts are achieved without gaps between the members constituting the dye-sensitized solar cell components unit 7, that is, between the cathode electrode 105 and the isolation layer 104, and between the isolation layer 104 and the current collecting electrode 103, shortening a diffusion length of the electrolyte solution to improve the photoelectric conversion efficiency.

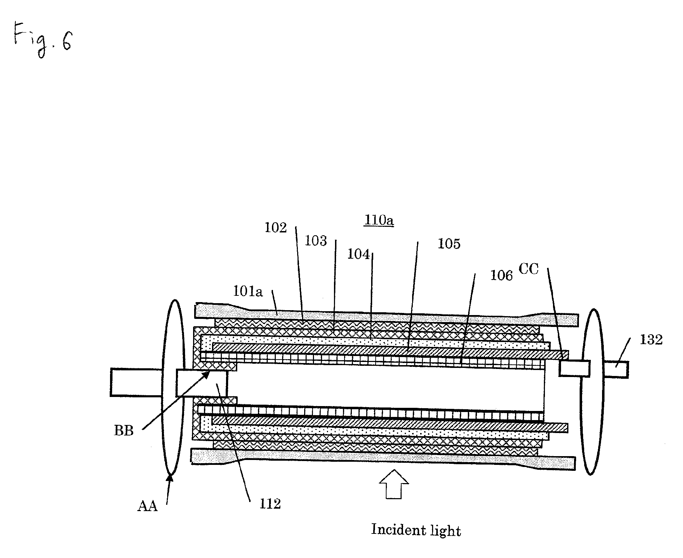

Next, a description is given of a dye-sensitized solar cell according to a third example of the present embodiment with reference to Figure 6.

A dye-sensitized solar cell 110a according to the third example of the present embodiment, illustrated in a schematic cross-sectional view taken along a side surface direction in Figure 6, has the same basic structure of a dye-sensitized solar cell components unit as the dye-sensitized solar cell components unit 7 of dye-sensitized solar cell 110 according to the embodiment.

In the dye-sensitized solar cell 110a, the core 106 is, similar to those in Figure 4, hollow tubular, one end part of the current collecting electrode 103 (shown in Figure 6 by an arrow BB) provided to be protruded from a laminated portion is folded to the inside of the core 106, and one end part a first extraction electrode 112 is inserted inside the core 106 so as to be electrically connected with the one end part of the current collecting electrode 103. While, a second extraction electrode 132 is attached so as to be electrically connected with the one end part of the cathode electrode layer 105 (shown in Figure 6 by the arrow BB) provided to be protruded from the laminated portion.

In the dye-sensitized solar cell 110a constructed as above according to the third example of the present embodiment, stronger joining can be carried out as compare with a joining method in related art in which the one end part of the extraction electrode is pressed to the one end part of the current collecting electrode provided to be protruded from the laminated portion, efficiently extracting generated power to the outside. In addition, since the joining between the current collecting electrode and the first extraction electrode is not required to be fixed by way of welding, screw fastening or the like, stress may possibly not occur owing to torsion or deviation in a circumferential direction, or stress which may occur owing to distortion possibly brought about by exogenous shock, heat or the like can be relaxed.

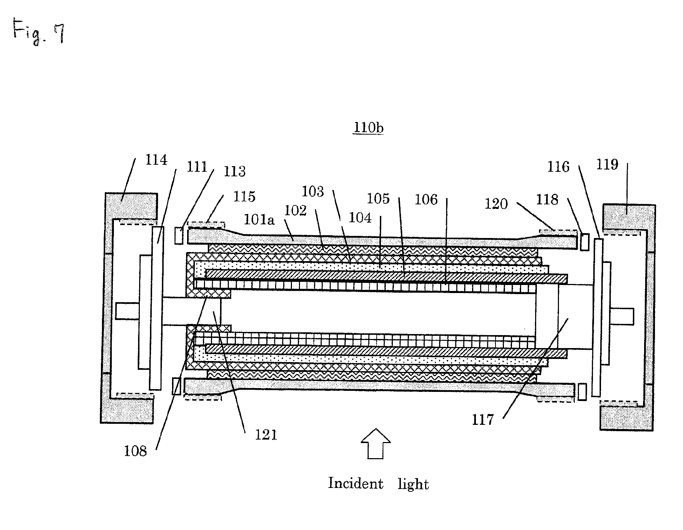

Next, a description is given of a dye-sensitized solar cell according to a fourth example of the present embodiment with reference to Figure 7.

A dye-sensitized solar cell 110b according to the fourth example of the present embodiment, illustrated in a schematic cross-sectional view taken along a side surface direction in Figure 7, is an example provided with a mechanical sealing structure as the sealing structure of the dye-sensitized solar cell 110a according to the third example of the present embodiment.

The dye-sensitized solar cell 110b according to the fourth example of the present embodiment uses a structure below as the sealing structure AA in Figure 5 for sealing the dye-sensitized solar cell components unit of the dye-sensitized solar cell 110a according to the third example of the present embodiment.

The dye-sensitized solar cell components unit is installed inside a double-ended glass tube 101a, and a convex electrode (first extraction electrode) 121 of an inner lid 111 is inserted into one opening end of the double-ended glass tube 101a so as to contact the folded current collecting electrode 103, the convex electrode 121 functioning also as the extraction electrode and being made of conductive property material. Whereas, a convex electrode (second extraction electrode) 117 of an inner lid 116 is inserted inside of one end part of the extended cathode electrode 105 at the other opening end of the double-ended glass tube 101a, the convex electrode 117 functioning also as the extraction electrode and being made of conductive property material. Note that in Figure 7, reference numerals 113 and 118 designate packings, reference numeral 114 designates an outer lid covering the inner lid 111, reference numerals 115 and 120 designate screw parts formed outside the double-ended glass tube 101a, and reference numeral 119 designates an outer lid covering the inner lid 116, respectively. The outer lids 114 and 119 have openings for exposing center parts of the inner lids 111 and 116, respectively. The outer lids in other embodiments below are similar to the above.

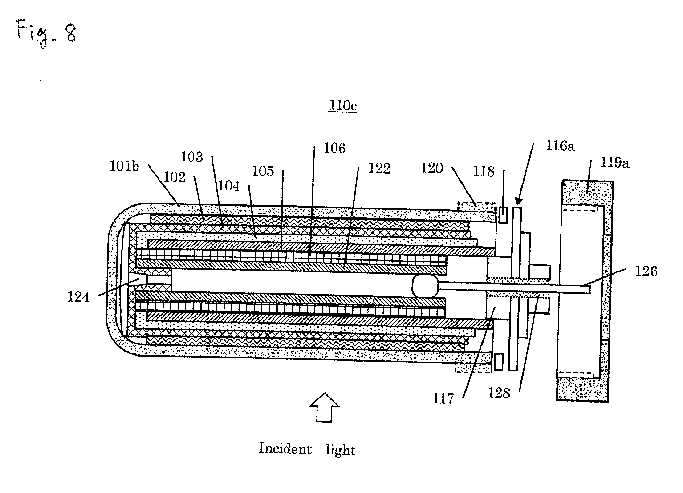

Next, a description is given of a dye-sensitized solar cell according to a fifth example of the present embodiment with reference to Figure 8.

A dye-sensitized solar cell 110c according to the fifth example of the present embodiment, illustrated in a schematic cross-sectional view taken along the side surface direction in Figure 8, is an example provided with a mechanical sealing structure as the sealing structure of the dye-sensitized solar cell 110a according to the third example of the present embodiment different from the dye-sensitized solar cell 110b according to the fourth example of the present embodiment.

The dye-sensitized solar cell 110c according to the fifth example of the present embodiment uses a structure below as the sealing structure AA in Figure 5 for sealing the dye-sensitized solar cell components unit of the dye-sensitized solar cell 110a according to the third example of the present embodiment.

An electric conductor layer 122 is provided inside the core 106, and the one end part of the current collecting electrode 103 is folded to the inside of the one end part of the electric conductor layer 122. A fixing part 124 fixing an opening side of the folded current collecting electrode 103 is provided. This causes the electric conductor layer 122 to be electrically connected with the current collecting electrode 103. The dye-sensitized solar cell components unit provided with the fixing part 124 is inserted from an opening of a single-ended glass tube (one side-opening member) 101b into the inside thereof with the folded side of the current collecting electrode 103 being as a leading front. A conductive member 126 is inserted from the opening of the single-ended glass tube 101b, and an enlarged part at the forward end of the conductive member 126 is made to enter the inside of the electric conductor layer 122 to be electrically connected with the other end part of the electric conductor layer 122. This causes the conductive member 126 to become the extraction electrode (first extraction electrode) which is electrically connected with the anode electrode. An inner lid 116a is provided which has a convex electrode (second extraction electrode) 117a similar to that of the dye-sensitized solar cell 110b according to the fourth example of the present embodiment and is for sealing the opening of the single-ended glass tube 101b. However, a through hole is formed at the center of the inner lid 116a via an insulator 128, through which hole a rear end of the conductive member 126 penetrates the inner lid 116a and is exposed. The respective ends of the first extraction electrode and the second extraction electrode can be extracted via one inner lid 116a having a simple structure.

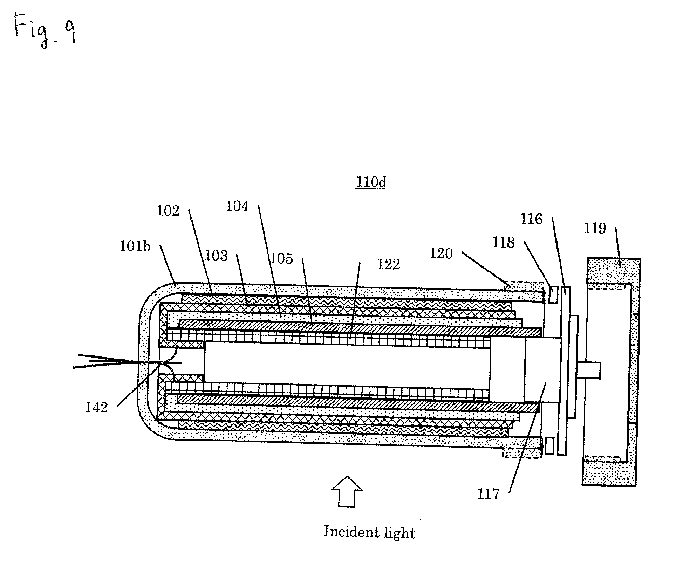

Next, a description is given of a dye-sensitized solar cell according to a sixth example of the present embodiment with reference to Figure 9.

A dye-sensitized solar cell 110d according to the sixth example of the present embodiment, illustrated in a schematic cross-sectional view taken along the side surface direction in Figure 9, is an example provided with a mechanical sealing structure as the sealing structure of the dye-sensitized solar cell 110a according to the third example of the present embodiment different from the dye-sensitized solar cells 110b and 110c according to the fourth and fifth examples of the present embodiment.

The dye-sensitized solar cell 110d according to the sixth example of the present embodiment uses a structure below as the sealing structure AA in Figure 5 for sealing the dye-sensitized solar cell components unit of the dye-sensitized solar cell 110a according to the second example of the present embodiment.

A dye-sensitized solar cell components unit constructed similarly to the dye-sensitized solar cell 110a shown in Figure 5 according to the third example of the present embodiment is inserted into the single-ended glass tube 101b which has a conductive wire bundle 130 inserted into a bottom part thereof. An end of the conductive wire bundle 130 positioned inside the single-ended glass tube 101b is pressed and spread to be electrically connected with the one end part of the current collecting electrode 103. The conductive wire bundle 130 becomes the first extraction electrode connected with the anode electrode. The inner lid 116 and the outer lid 119 are provided on the opening side of the single-ended glass tube 101b similarly to the dye-sensitized solar cell 110b shown in Figure 7 according to the fourth example of the present embodiment.

Next, a description is given of a method for manufacturing a dye-sensitized solar cell according to the present embodiment.

The method for manufacturing the dye-sensitized solar cell 110 according to the second example of the present embodiment includes laminating and arranging the porous semiconductor layer carrying dye, isolation layer, and cathode electrode layer at the outer periphery of the current collecting electrode and inserting the layers into within the transparent member to form the dye-sensitized solar cell components unit, rolling a sheet material having flexibility and restoring force and inserting the rolled material inside the cathode electrode layer of the dye-sensitized solar cell components unit to form the core. Both ends of the dye-sensitized solar cell components unit provided with the core are sealed by way of an adequate sealing structure in a state where one end parts of the current collecting electrode and the cathode electrode layer respectively are exposed.

In order to obtain the dye-sensitized solar cell 110a according to the third example of the present embodiment, the one end part of the current collecting electrode provided to be protruded from the laminated portion of the dye-sensitized solar cell components unit is folded to the inside of the core and the one end part of the first extraction electrode is inserted inside the core so as to be electrically connected with the one end part of the current collecting electrode. Whereas, the second extraction electrode is attached so as to be electrically connected with the one end part of the cathode electrode layer provided to be protruded from the laminated portion. Both ends of the dye-sensitized solar cell components unit provided with the core are sealed by way of an adequate sealing structure in a state where one end parts of the current collecting electrode and the cathode electrode layer respectively are exposed.

### Examples

Hereinafter, a description is given in more detail of the present invention on the basis of Examples and Comparative Examples, but the present invention is not limited to the Examples.

### (Example 1)

A titanium foil having a width of 10 mm, length of 60 mm, and thickness of 20 µm was sputtered with platinum on one surface thereof to produce a cathode electrode (cathode electrode layer). Next, insulation sheet made of Teflon having a width of 11 mm, length of 40 mm, and thickness of 32 µm was stacked on the side of the cathode electrode sputtered with platinum, and one end thereof was attached to a titanium rod having an outer diameter of 2 mm and length of 100 mm and fixed by a polyimide tape.

In addition, a stainless steel mesh having a width of 11 mm, length of 60 mm, and thickness of 40 µm was sputtered with titanium on both surfaces thereof so as to have a thickness of 300 nm to produce the current collecting electrode. Further, the stainless steel mesh was applied with titania paste on one surface thereof so as to have both ends left without application by 15 mm respectively and so as to have a film thickness of 15 µm after drying, and baked at 500°C for 30 minutes to form a titania layer (porous semiconductor layer). Moreover, the stainless steel mesh was immersed in a dye solution of 0.05 wt% (Black dye, manufactured by Solaronix SA, acetonitrile:t-butyl alcohol = 1:1) for 72 hours to produce a current collecting electrode having a porous semiconductor layer carrying dye.

The resultant electrode was rolled such that the porous semiconductor layer carrying dye of the current collecting electrode having the porous semiconductor layer was to be outer side, and inserted into within a glass tube (transparent member) having an outer diameter of 6 mm, inner diameter of 4 mm, and length of 40 mm to a position where the current collecting electrode was protruded from both ends of the glass tube by 10 mm respectively. The tubular portion protruded from the glass tube of the current collecting electrode was cut into one thin plate having a width of 2 mm to be set as an extraction electrode.

The cathode electrode and an insulation sheet (isolation layer) were fixed at one sides thereof to the titanium rod and wound around the titanium rod such that the insulation sheet was to be an outer periphery, the wound insulation sheet was temporarily fixed at an end thereof by the polyimide tape and was inserted inside the current collecting electrode of the glass tube. The polyimide tape used for the temporary fixing immediately before the insertion into the glass tube was peeled off, one ends of the wound insulation sheet and cathode electrode were released to make the insulation sheet and cathode electrode pressed to the current collecting electrode. In this way, the dye-sensitized solar cell components unit was formed within the glass tube.

Further, an electrolyte of 3-methoxy propionitrile solution containing 40 mM iodine, 500 mM LiI and 580 mM t-butylpyridine was injected from a boundary between the glass tube and the dye-sensitized solar cell components unit, and in a state where the extraction electrodes were protruded from both ends of a glass tube 1, both ends of the glass tube 1 were applied with an UV curable resin and subjected to UV curing to be sealed to produce the dye-sensitized solar cell.

Solar cell characteristics of the dye-sensitized solar cell 10, measured under the irradiation with a simulated solar light of AM 1.5 and 100 mW/cm2 by use of a solar simulator, had an output of Voc = 0.62 V/cm², Jsc = 11.34 mA/cm², FF = 0.72, and conversion efficiency = 5.09%.

### (Comparative Example 1)

A dye-sensitized solar cell was produced in the same manner as in Example 1 except for using a cathode electrode obtained by sputtering platinum on the side surface of a titanium rod having an outward form of 2 mm and length of 100 mm, winding the insulation sheet around the side surface of the cathode electrode, in the order of the current collecting electrode having the porous semiconductor layer, such that the porous semiconductor layer carrying dye was to be outer side, fixing by the polyimide tape to form the dye-sensitized solar cell components unit, and thereafter inserting the unit into the glass tube. An inner wall of the glass tube was not brought into contact with the porous semiconductor layer impregnated with the dye, and visual confirmation was obtained that the electrolyte solution was present in a gap between the inner wall of the glass tube and the porous semiconductor layer impregnated with the dye.

Solar cell characteristics of the produced dye-sensitized solar cell 10 had an output of Voc = 0.54 V/cm², Jsc = 9.37 mA/cm², FF = 0.54, and conversion efficiency = 3.79%.

### (Example 2)

In addition, a stainless steel mesh having a width of 50 mm, length of 120 mm, and thickness of 30 µm was sputtered with titanium on both surfaces thereof so as to have a thickness of 300 nm to produce the current collecting electrode. Further, the stainless steel mesh was applied with titania paste on one surface of the mesh so as to have portion having a width of 50 mm and length of 20 mm left without application in the stainless steel mesh of a width of 50 mm and length of 120 mm and so as to have a film thickness of 15 µm after drying, and baked at 450°C for 30 minutes to form a titania layer (porous semiconductor layer). Moreover, the stainless steel mesh was immersed in a dye solution of 0.05 wt% (N719, manufactured by Solaronix SA, acetonitrile:t-butyl alcohol = 1:1) for 72 hours to produce a current collecting electrode having a porous semiconductor layer carrying dye.

A titanium foil having a width of 48 mm, length of 110 mm, and thickness of 50 µm was sputtered with platinum on one surface thereof to produce a cathode electrode (cathode electrode layer). Next, the cathode electrode was covered on the platinum-sputtered side thereof with an isolation layer having a width of 55 mm, length of 120 mm, and thickness of 20 µm so as to have a portion left not covered by 10 mm, and the isolation layer is covered such that the one end part protruded by 20 mm which was of the current collecting electrode having the porous semiconductor layer carrying dye and on which the porous semiconductor layer was not laminated. The stacked cathode electrode, isolation layer, and current collecting electrode were arranged respectively so as to position the current collecting electrode 3 on the outside and the cathode electrode on the inside and were rolled, and inserted into within the transparent member having a size of an outer diameter of 20 mm, inner diameter of 16 mm, and length of 130 mm toward a position where an end of the current collecting electrode on which the porous semiconductor layer was not laminated protruded from the end of the transparent member by 10 mm.

PTFE sheet having a length of 110 mm, width of 150 mm, and thickness of 0.5 mm which was used as a core was rolled into a tubular form having a length of 110 mm and outward form of 12 mm around and inserted inside the electrode of the transparent member with the tubular form being maintained by use of tweezers, and when the core was inserted to a position where the core did not protrude from an opening of the transparent member on the current collecting electrode side, the fixing by the tweezers was removed to fix the dye-sensitized solar cell components unit in the transparent member.

The current collecting electrode protruded from the transparent member that the semiconductor layer did not have was folded into a void made on the inner diameter side of the core by removing the tweezers, the convex electrode of the inner lid functioning also as the extraction electrode made of titanium was inserted into the void made on the inner diameter side of the core with the folded current collecting electrode, a packing was interposed between the opening of the transparent member and the inner lid functioning also as extraction electrode, and further the inner lid was held by a PEEK outer lid subjected to screw processing on the inside thereof to tighten hard a screw processed to be the transparent member with the outer lid.

An electrolyte of γ-butyrolactone solution containing 50 mM iodine, 900 mM 1-Methyl-3-propylimidazolium iodide, and 0.5M N-methylbenzimidazolium was injected under a reduced pressure from the other opening of the transparent member. After the electrolyte solution injection, the convex electrode of the inner lid functioning also as the titanium extraction electrode was inserted so as to be brought into contact with the inner wall of the cathode electrode exposed around the opening of the transparent member, a packing was interposed between the opening of the transparent member 1 and the inner lid functioning also as extraction electrode, and further a screw part of the transparent member and the outer lid were tighten hard in a manner that the inner lid was held by a PEEK outer lid subjected to screw processing on the inside thereof to produce a dye-sensitized solar cell as shown in Figure 7.

Solar cell characteristics of the dye-sensitized solar cell 10b, measured under the irradiation with a simulated solar light of AM 1.5 and 100 mW/cm2 by use of a solar simulator, had an output of Voc = 0.72 V/cm², Jsc = 11.00 mA/cm², fill factor (FF)= 0.72, and conversion efficiency = 6.10%.

### (Comparative Example 2)

A dye-sensitized solar cell was produced in the same manner as in Example 1 except for using a PTFE cylindrical material (columnar material) having an outer diameter of 15 mm, length of 110 mm as the core. Visual confirmation was obtained that the electrolyte solution was not stable and concentration was not uniform in a gap between the inner wall of the glass tube and the porous semiconductor layer impregnated with the dye.

Solar cell characteristics of the produced dye-sensitized solar cell had an output of Voc = 0.68 V/cm2, Jsc = 9.40 mA/cm2, FF = 0.51, and conversion efficiency = 3.90%, which was lower than Example 1 in the efficiency, in particular, low in the fill factor.

### (Example 3)

Similar to Example 2, the current collecting electrode having the formed porous semiconductor layer carrying dye, isolation layer, and cathode electrode were arranged so as to position current collecting electrode on the outside and the cathode electrode on the inside and were rolled, and after an end of the current collecting electrode on which the porous conductor layer was not laminated was folded to the inside by about 10 mm, the dye-sensitized solar cell components unit was inserted into within a single-ended glass tube having an outer diameter of 20 mm, inner diameter of 16 mm, and length of 130 mm, the glass tube being provided with a convex jig at a bottom thereof, to a position where the folded end of the current collecting electrode covered the convex jig.

PTFE sheet having a length of 110 mm, width of 150 mm, and thickness of 0.5 mm which was used as a core was rolled into a tubular form having a length of 110 mm, and outward form of 12 mm around and inserted inside the dye-sensitized solar cell components unit having the transparent member inserted therein with the tubular form being maintained by use of tweezers, the fixing by the tweezers was once removed after reaching in front of the folded current collecting electrode, the core was inserted between the folded current collecting electrode and the cathode electrode, and the core was pushed to the fixed jig to fix the dye-sensitized solar cell components unit in the glass tube. Further, a titanium foil having a length of 108 mm, width of 50 mm, and thickness of 0.05 mm was inserted into a void on the inner diameter side of the core, and pushed until touching the fixed jig to bring the current collecting electrode into contact with the titanium foil.

The electrolyte similar to Example 1 was injected under a reduced pressure from an opening of the glass tube having the dye-sensitized solar cell components unit fixed thereto.

Prepared were a titanium electrode rod having the convex electrode provided inside the titanium foil laminated on the current collecting electrode, a convex electrode other than the above connected with the cathode electrode, and an inner lid separating these two electrodes by an insulation cover and functioning also as a titanium outward extraction electrode, one convex electrode was inserted inside the titanium foil and the other convex electrode was inserted inside the cathode electrode, and further the inner lid was inserted so as to hold a packing in the glass tube. The inner lid was held by a PEEK outer lid subjected to screw processing on the inside thereof to tighten hard a screw part of the glass tube and the outer lid to produce a dye-sensitized solar cell as shown in Figure 8.

Solar cell characteristics of the produced dye-sensitized solar cell 10c had an output of Voc = 0.72 V/cm², Jsc = 10.70 mA/cm², FF = 0.70, and conversion efficiency = 5.70%.

### (Example 4)

The current collecting electrode having the porous semiconductor layer carrying dye, isolation layer, and cathode electrode which were formed similar to Example 2 were rolled so as to position the current collecting electrode on the outside and the cathode electrode on the inside, and after an end of the current collecting electrode on which the porous semiconductor layer was not laminated was folded to the inside of the isolation layer, the dye-sensitized solar cell components unit was inserted into within a single-ended glass tube having an outer diameter of 20 mm, inner diameter of 16 mm, and length of 120 mm, the glass tube having a platinum wire bundle passed therethrough to seal the end thereof, to a position where the folded end of the current collecting electrode sufficiently reached a bottom of the single-ended glass tube.

PTFE sheet having a length of 110 mm and thickness of 0.5 mm which was used as a core is rolled thinly and inserted inside the glass tubular dye-sensitized solar cell components unit with the tubular form being maintained by use of tweezers. The fixing by the tweezers is once removed in front of the folded current collecting electrode, the core is slowly pushed such that the folded end of the current collecting electrode and the wire bundle are arranged inside the core, and the fixing by the tweezers is removed. Further, the wire bundle in a void in the core was spread by use of glass bar to make the wire bundle joined to the folded end of the current collecting electrode to fix the dye-sensitized solar cell components unit in the glass tube.

Similar to Example 2, after injection of the electrolyte under a reduced pressure, the convex electrode of the inner lid was inserted, the convex electrode being processed so as to be brought into contact with the inside of the cathode electrode at the glass tube opening and functioning also as a titanium outward extraction electrode, a packing was held between the glass tube opening and the inner lid, and further a screw part of the glass tube and the outer lid were tighten hard in a manner that the inner lid was held by a PEEK outer lid subjected to screw processing on the inside thereof to produce a dye-sensitized solar cell as shown in Figure 9.

Solar cell characteristics of the produced dye-sensitized solar cell 10d had an output of Voc = 0.71 V/cm², Jsc = 10.76 mA/cm², FF = 0.71, and conversion efficiency = 5.85%.

### (Example 5)

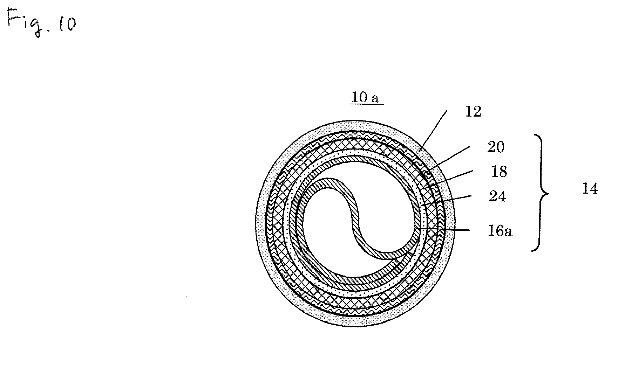

A description is given of Example 5 with reference to Figure 10.

A titanium foil having a width of 20 mm, length of 60 mm, and thickness of 20 µm was sputtered with platinum on a half area of one surface thereof (area having a width of 20 mm and length of 30 mm) to produce a cathode electrode layer 16a. The cathode electrode layer was softly folded back at the center in a length direction to align and overlap both ends thereof, and further rolled into a cylinder form to be remained such that the overlapped both ends were overlapped with the folded back portion in a manner that a surface not sputtered with platinum was to be inner side. Next, a Teflon isolation layer 24 having a width of 11 mm, length of 40 mm, and thickness of 32 µm was formed into a cylindrical form to be remained, into inside of which isolation layer the cathode electrode was inserted with the surface sputtered with platinum being to be outer side. At this time, since the isolation layer is formed so as to have a cylinder diameter which was smaller than a half of a cylinder diameter defined when the cathode electrode layer is completely folded back at the folded back portion, the folded back portion of the cathode electrode layer is spread inside. The cathode electrode layer is to be a spring body,

In addition, a stainless steel mesh having a width of 11 mm, length of 60 mm, and thickness of 40 µm was sputtered with titanium on both surfaces thereof so as to have a thickness of 300 nm to produce a current collecting electrode 18. Further, the stainless steel mesh was applied with titania paste on one surface thereof so as to have both ends left without application by 15 mm respectively and so as to have a film thickness of 15 µm after drying, and baked at 500°C for 30 minutes to form a titania layer (porous semiconductor layer). Moreover, the stainless steel mesh was immersed in a dye solution of 0.05 wt% (Black dye, manufactured by Solaronix SA, acetonitrile:t-butyl alcohol = 1:1) for 72 hours to produce a current collecting electrode having a porous semiconductor layer carrying dye.

The resultant electrode was rolled such that the porous semiconductor layer carrying dye of the current collecting electrode having the porous semiconductor layer was to be outer side, and inserted into within a glass tube transparent member 12 having an outer diameter of 6 mm, inner diameter of 4 mm, and length of 40 mm to a position where the current collecting electrode was protruded from both ends of the glass tube by 10 mm respectively. The tubular portion protruded from the glass tube of the current collecting electrode was cut into one thin plate having a width of 2 mm to be set as an extraction electrode (not shown in Figure 10).

The bended portion of the titanium foil was held by the tweezers and wound around the tweezers such that the surface sputtered with platinum of the cathode electrode was to be outer side, and an end of the wound insulation sheet at the outermost periphery and the titanium foil at the innermost periphery were temporarily fixed by the tweezers to be inserted into inside the glass tube current collecting electrode. The insulation sheet and cathode electrode fixed by the tweezers were released to make the insulation sheet and the cathode electrode pressed to the current collecting electrode. In this way, the dye-sensitized solar cell components unit 14 was formed within the glass tube.

Further, an electrolyte of 3-methoxy propionitrile solution containing 40 mM iodine, 500 mM LiI and 580 mM t-Butylpyridine was injected from a boundary between the glass tube and the dye-sensitized solar cell components unit, and in a state where the extraction electrodes were protruded from both ends of a glass tube, both ends of the glass tube were applied with an UV curable resin and subjected to UV curing to be sealed to produce the dye-sensitized solar cell 10a.

Solar cell characteristics of the dye-sensitized solar cell, measured under the irradiation with a simulated solar light of AM 1.5 and 100 mW/cm2 by use of a solar simulator, had an output of Voc = 0.64 V/cm², Jsc = 11.50 mA/cm², FF = 0.72, and conversion efficiency = 5.22%.

### Reference Signs List

10, 10a, 110, 110a, 110b, 110c, 110d dye-sensitized solar cell
12, 101 transparent member
14, 107 dye-sensitized solar cell components unit
16, 16a, 105 cathode electrode layer
18, 103 current collecting electrode
20, 102 porous semiconductor layer carrying dye
22 core rod
24, 104 isolation layer
26 extraction electrode
28 auxiliary spring
101a double-ended glass tube
101b single-ended glass tube
106 core
111, 116, 116a inner lid
112 first extraction electrode
114, 119 outer lid
117, 117a, 121 convex electrode
122 electric conductor layer
124 fixing part
126 conductive member
128 insulator
130 conductive wire bundle
132 second extraction electrode
A sealing structure
B cutout portion

## Claims

1. A dye-sensitized solar cell comprising:
a dye-sensitized solar cell components unit having a cathode electrode layer, an electrolyte layer, a current collecting electrode, and a porous semiconductor layer carrying dye which are provided within a cylindrical or circular truncated conical transparent member,
wherein the components of the dye-sensitized solar cell components unit are laminated and arranged in the above order centering around the cathode electrode layer toward the transparent member, and
the cathode electrode layer is a spring body and presses the dye-sensitized solar cell components unit to the transparent member with an elastic restoring force.

2. The dye-sensitized solar cell according to claim 1, wherein the spring body is a flat spiral spring.

3. The dye-sensitized solar cell according to claim 1, wherein the spring body is formed by performing bending work on a metal plate and is an expandable and contractable cylinder in which a part of a bended surface thereof along an axis is cut out in an axis direction.

4. The dye-sensitized solar cell according to claim 3, wherein an auxiliary spring is hung across the cut out portion of the cylinder.

5. A method for manufacturing a dye-sensitized solar comprising:
a step of laminating and arranging a porous semiconductor layer carrying dye at an outer periphery of a current collecting electrode, and inserting the layer into within a cylindrical or circular truncated conical transparent member; and
a step of fixing one side of a cathode electrode layer material in a foil form to a support rod and winding the cathode electrode material around the support rod in a spiral manner to obtain the spring body-formed cathode electrode layer in a contracted state and inserting the support rod wound by the cathode electrode layer into a space inside the current collecting electrode which is inserted into within the transparent member.

6. A dye-sensitized solar cell comprising:
an insulating core, a cathode electrode layer, an electrolyte layer, a current collecting electrode, and a porous semiconductor layer carrying dye within a tubular or pyramidal transparent member which are laminated and arranged in this order centering around the core toward the transparent member,
wherein the core is formed by rolling and inserting inside the cathode electrode layer a sheet material having flexibility and restoring force, and the cathode electrode layer, the electrolyte layer, the current collecting electrode and the porous semiconductor layer carrying dye are pressed to the transparent member with the restoring force of the core.

7. The dye-sensitized solar cell according to claim 6 wherein
the core is hollow tubular or hollow pyramidal, one end part of the current collecting electrode provided to be protruded from a laminated portion is folded to the inside of the core, and one end part of a first extraction electrode is inserted inside the core so as to be electrically connected with the one end part of the current collecting electrode, and
a second extraction electrode is attached so as to be electrically connected with the one end part of the cathode electrode layer provided to be protruded from the laminated portion.

8. The dye-sensitized solar cell according to claim 6 wherein
the transparent member is a one side-opening member, the core is hollow tubular or hollow pyramidal, an electric conductor layer is provided inside the core, one end part of the current collecting electrode provided to be protruded from the laminated portion is folded to the inside of one end part of the electric conductor layer to be electrically connected with the electric conductor layer, and one end part of a first extraction electrode is inserted so as to be electrically connected with the other end part of the electric conductor layer, and
a second extraction electrode is attached so as to be electrically connected with the one end part of the cathode electrode layer provided to be protruded from the laminated portion.
